(19) Europäisches Patentamt / European Patent Office / Office européen des brevets

(11) **EP 2 673 157 B1**

(12) **EUROPÄISCHE PATENTSCHRIFT**

(45) Veröffentlichungstag und Bekanntmachung des Hinweises auf die Patenterteilung:
**13.09.2017 Patentblatt 2017/37**

(21) Anmeldenummer: **12702836.3**

(22) Anmeldetag: **08.02.2012**

(51) Int Cl.:
**H04B 5/00** (2006.01)     **B60L 5/00** (2006.01)
**H01F 38/14** (2006.01)     **H02J 5/00** (2016.01)

(86) Internationale Anmeldenummer:
**PCT/EP2012/052130**

(87) Internationale Veröffentlichungsnummer:
**WO 2012/107490 (16.08.2012 Gazette 2012/33)**

(54) **VORRICHTUNG ZUR ENERGIEÜBERTRAGUNG UND ZUR INDUKTIVEN KOMMUNIKATION**

APPARATUS FOR POWER TRANSMISSION AND FOR INDUCTIVE COMMUNICATION

DISPOSITIF DE TRANSMISSION D'ÉNERGIE ET DE COMMUNICATION PAR INDUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.02.2011 DE 102011010793**
**09.02.2011 DE 102011010792**

(43) Veröffentlichungstag der Anmeldung:
**18.12.2013 Patentblatt 2013/51**

(73) Patentinhaber: **Conductix-Wampfler GmbH**
**79576 Weil am Rhein (DE)**

(72) Erfinder:
• **RHEIN, Benjamin**
**79541 Lörrach (DE)**
• **GREEN, Andrew**
**79429 Malsburg-Marzell (DE)**
• **SCHNURBUSCH, Wolfgang**
**31863 Coppenbrügge (DE)**

(74) Vertreter: **Charrier Rapp & Liebau**
**Patentanwälte**
**Fuggerstrasse 20**
**86150 Augsburg (DE)**

(56) Entgegenhaltungen:
WO-A1-98/57413     WO-A1-03/026915
DE-A1- 3 916 610     DE-A1- 19 512 107
DE-A1- 19 649 682     DE-U1- 20 205 352

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zur Energieübertragung und zur induktiven Kommunikation nach dem Oberbegriff des Anspruchs 1.

Aus der DE 102 16 422 A1 ist eine Vorrichtung zur induktiven Energieversorgung eines beweglichen Objekts bekannt, die auch eine Kommunikation zwischen dem beweglichen Objekt und einer zentralen Steuereinheit ermöglicht. Hierzu ist parallel zu einer entlang der vorgesehenen Bewegungsbahn des Objektes verlegten Leiterschleife, über welche durch induktive Kopplung mit einem an dem Objekt angeordneten Abnehmer elektrische Energie zu dem Objekt übertragbar ist, eine Datenleitung verlegt, über welche ebenfalls durch induktive Kopplung mit einem anderen an dem Objekt angeordneten Abnehmer Datensignale zu bzw. von einer an dem Objekt angeordneten Sende- und Empfangseinrichtung übertragbar sind. Für die Datenübertragung sind in besagter Schrift lediglich ein Frequenzband im Bereich von 1 MHz und eine Datenrate im Bereich von 9600 Baud, jedoch keine genaueren Informationen angegeben.

Die WO 03/005380 A2 zeigt Einzelheiten der Kombination einer zur induktiven Energieübertragung zu einem beweglichen Verbraucher dienenden Leiterschleife mit einer Datenleitung einschließlich der Integration beider in einem speziellen Kabel. Zur Modulation des Datensignals wird dort Frequenzumtastung (FSK) vorgeschlagen und als Richtwert für den in Frage kommenden Bereich der Übertragungsrate wird 10 bis 150 kBit/s genannt.

Gegenüber diesem Stand der Technik bestehen für die Kommunikation zwischen automatischen Transportfahrzeugen und einer zentralen Steuereinheit bzw. zwischen solchen Fahrzeugen untereinander heute um Größenordungen höhere Anforderungen an die Übertragungsrate. Diesen Anforderungen versucht man beispielsweise mit der Verwendung lokaler Funknetzwerke (WLAN) nach der Norm IEEE-802.11 gerecht zu werden. Probleme sind hierbei unter anderem die lückenlose Abdeckung des Bewegungsbereiches der Fahrzeuge, der in industriellen Anlagen durch Maschinen verschiedenster Art verursachte elektromagnetische Störpegel sowie die Sicherheit der Kommunikation gegenüber externen Störungen oder Manipulationen.

Ein anderer bekannter Ansatz ist die Verlegung eines geschlitzten Mikrowellen-Hohlleiters entlang der vorgesehenen Bewegungsbahnen der Fahrzeuge, in den jeweils mit den Fahrzeugen verbundene Antennen eintauchen. Die mit der Verwendung von WLAN verbundenen Probleme können zwar hierdurch weitgehend vermieden werden, doch wird dies mit einem relativ hohen Aufwand im mechanischen Aufbau des Kommunikationssystems erkauft, da ein Mikrowellen-Hohlleiter eine starre Form hat und die Antenne präzise im Schlitz des Hohlleiters geführt werden muss.

Die WO 03/026915 A1 lehrt eine Elektrohängebahn mit berührungsloser Energieübertragung zwischen einem längs einer Laufschiene für mobile Transporteinheiten im Abstand angeordneten Speiseleiter und einem induktiven Stromabnehmer an der Transporteinheit, bei der zur berührungslosen Datenübertragung zwischen einer Zentralstation und den Transporteinheiten in definiertem Abstand längs des Speiseleiters eine Datenübertragungsschleife so angeordnet ist, dass deren parallele Leiter genau in einer Feldlinie des Speiseleiters liegen. Die Datenübertragungsschleife ist über eine Übertragungsstation galvanisch mit der Zentralstation verbunden. Zur induktiven Kopplung mit den Transporteinheiten ist an diesen ein Kommunikationsmodul mit auf Ferritkernen vorgesehenen Sende- und Empfangsspulen angeordnet, das alle auf der Datenübertragungsschleife ausgetauschten Informationen mitempfangen kann. Die induktive Übertragung erfolgt in Form von als digitale Signale dienenden Sinussignalfolgen in zwei unterschiedlichen Fixfrequenzen im Mittelfrequenzbereich.

Aus der DE 195 12 107 A1 ist ein spurgeführtes Transportsystem mit berührungsloser induktiver Energieübertragung bekannt, welches eine gleichzeitige Datenübertragung auf der Basis eines entlang der Fahrstrecke verlegten Leckwellenleiters mit einem Längsschlitz oder einer periodischen Anordnung von Querschlitzen vorsieht. Das Fahrzeug ist mit einer Patch-Antenne ausgerüstet, die zu der Leckwellenleitung geeignet ausgerichtet ist. Alternativ hierzu wird vorgeschlagen, zur Datenübertragung die zur Energieübertragung längs der Fahrstrecke verlaufende Leitung mitzuverwenden und hierzu die stationäre und die fahrzeugseitige Datenübertragungseinheit jeweils über Filter an diese Energieübertragungsleitung bzw. an die fahrzeugseitige Sekundärwicklung anzukoppeln.

Aus der DE 39 16 610 A1 ist eine Einrichtung zur Spurführung von Fahrzeugen und gleichzeitigen Datenübertragung zwischen Fahrzeugen und fahrbahnseitigen Anlagen bekannt. Für das Spurführungssignal und die Datensignale können getrennte Leiter, aber auch ein gemeinsamer Leiter verwendet werden. Als Möglichkeiten zur Realisierung einer Datenübertragung in beide Richtungen werden Frequenz- und Zeitmultiplex genannt. Für die Datenübertragung ist ein Frequenzbereich von 40-140 kHz vorgesehen.

Der Erfindung liegt die Aufgabe zugrunde, für die Energieübertragung und für die induktive Kommunikation zu bzw. mit einem spur- oder schienengeführten beweglichen Objekt eine kostengünstige und leistungsfähige Lösung aufzuzeigen.

Diese Aufgabe wird erfindungsgemäß durch eine Vorrichtung mit den Merkmalen des Anspruchs 1 sowie durch die Verwendung nach Anspruch 17 gelöst. Vorteilhafte Ausgestaltungen der Erfindung sind in den Unteransprüchen angegeben.

Erfindungsgemäß wird bei einer gattungsgemäßen Vorrichtung zur Energieübertragung und zur induktiven Kommunikation zu bzw. mit einem spur- oder schienengeführten beweglichen Objekt für die Kommunikation ein Modem eingesetzt, das nach einem orthogonalen Frequenzmultiplexverfahren mit einer Datenrate von mindestens 50 MBit/s arbeitet. Modems dieser Art werden bisher dazu verwendet, das Stromversorgungsnetz eines Gebäudes zur Datenübertragung zu nutzen, wobei die Datensignale über Steckdosen in die Netzleitungen eingekoppelt bzw. aus diesen ausgekoppelt werden. Überraschenderweise eignen sich Modems dieser Art auch zur induktiven Kommunikation mit einem beweglichen Objekt über eine entlang der Bewegungsbahn des Objektes verlegte Datenleitung, die sich in loser Kopplung mit einer an dem Objekt angeordneten Kommunikationsinduktivität befindet.

Diese Anwendung stellt in doppelter Hinsicht eine Zweckentfremdung dar, da Modems dieser Art ausschließlich für den örtlich stationären Betrieb am Stromversorgungsnetz eines Gebäudes und für die Mitbenutzung von Netzleitungen zur Datenübertragung konzipiert sind. Über diese beiden Grundvoraussetzungen setzt sich die vorliegende Erfindung hinweg. Sie macht sich sogar einen bei der Datenübertragung über ein Stromversorgungsnetz unerwünschten Störeffekt zunutze, nämlich die Tatsache, dass ein Teil der Leistung des aufmodulierten Datensignals entlang einer Netzleitung in die Umgebung abgestrahlt wird, wodurch die am Leitungsende empfangbare Leistung abnimmt und Funkempfangseinrichtungen in der Umgebung gestört werden können. Erfindungsgemäß ermöglicht diese Abstrahlung hingegen gerade den induktiven Empfang des Nutzsignals durch andere Teilnehmer.

Auch die erfindungsgemäße Bereitstellung einer separaten Datenleitung trotz Vorhandensein einer Energieübertragungsleitung steht im Widerspruch zu dem Grundkonzept der gemeinsamen Energie- und Datenübertragung über dieselbe Leitung, auf welches hin Modems der fraglichen Art ausgelegt sind. Energieübertragungsleitungen zur Versorgung von beweglichen Verbrauchern wie Kränen, Elektrohängebahnen und automatisch gesteuerten Flurförderfahrzeugen, die als Leiterschleifen zur induktiven Energieentnahme oder als Schleifleitungen zur Kontaktierung durch einen Stromabnehmer ausgebildet sein können, arbeiten jedoch üblicherweise mit höheren Spannungen als der normalen Netzspannung und es fließen dort größere Leistungen. Bei Schaltvorgängen treten zusätzliche Spannungsspitzen auf. Induktive Energieübertragungsleitungen sind entlang der Leitung mit Abgleichkondensatoren beschaltet, um einen Betrieb des Systems in Resonanz zu ermöglichen. Bei Schleifleitungen sind die Stromschienen aus Sicherheitsgründen im Inneren von Isolierprofilen angeordnet, die andere Gegenstände als Stromabnehmer von ihnen fernhalten sollen.

Alle diese Eigenschaften von Energieübertragungsleitungen zur Versorgung beweglicher Verbraucher sind ihrer Mitbenutzung zur Datenübertragung abträglich und müssen bei der Auslegung der zur Datenübertragung eingesetzten Komponenten entsprechend berücksichtigt werden. Die auf den ersten Blick als unnötig erscheinende Bereitstellung einer separaten Datenleitung überwindet diese Schwierigkeiten und vereinfacht die Anforderungen an die zur Datenkommunikation eingesetzten Komponenten erheblich. Es kommt hinzu, dass es bei Energieübertragungsleitungen der fraglichen Art beim Auftreten sicherheitsrelevanter Fehlersituationen zu Notabschaltungen kommt. Bei einer Mitbenutzung zur Datenkommunikation wäre diese bei einer Trennung von Leitungsabschnitten im Zuge einer Notabschaltung ebenfalls unterbrochen. Die Verwendung einer separaten Datenleitung ermöglicht hingegen eine Weiterführung der Datenkommunikation auch bei einer Notabschaltung der Energieübertragungsleitung.

Für die Datenübertragung über Stromversorgungsnetze existieren Normen in Gestalt der ITU G.9960 und der IEEE P1901. Diese Normen, in denen unter anderem anwendungsspezifische Einzelheiten des orthogonalen Frequenzmultiplexverfahrens spezifiziert werden, sind von der International Telecommunications Union bzw. vom Institute of Electrical and Electronics Engineers erhältlich und werden hiermit zum Bestandteil der vorliegenden Offenbarung gemacht. Weitere einschlägige Normen auf dem Gebiet der Datenübertragung über Stromversorgungsnetze, die auch als Powerline-Kommunikationstechnik bezeichnet wird, sind die Normen HomeplugAV und G.hn. Auch diese werden hiermit zum Bestandteil der vorliegenden Offenbarung gemacht. Die Verwendung von Hardware, die einer dieser Normen entspricht, gewährleistet deren langfristige Verfügbarkeit und die verlässliche Einhaltung der entsprechenden Spezifikationen.

Für die erfindungsgemäße Anwendung eines Modems besagter Art zweckmäßige Maßnahmen sind die Erhöhung der Sendeleistung und der Empfangsempfindlichkeit. Dies betrifft die Reichweite der Datenübertragung, da die Übertragungsstrecke wegen der vergleichsweise großen Länge der Datenleitung und deren loser Kopplung mit der Kommunikationsinduktivität mit einer wesentlich größeren Dämpfung behaftet ist als das Stromversorgungsnetz eines Gebäudes mit entsprechend kürzerer Leitungslänge und fester Kopplung aller Teilnehmer an die Netzleitungen. Die benötigte Funktion kann durch einen Verstärker und/oder durch einen Übertrager realisiert werden.

Ein Ende der Datenleitung ist an einer mit einer zentralen Steuereinheit verbundenen Kommunikationseinrichtung angeschlossen, welche ein Modem der gleichen Art enthält, wie es die Kommunikationseinrichtung des beweglichen Objektes aufweist. Auch hier ist zur Gewährleistung einer hohen Reichweite die Zwischenschaltung eine Verstärkers und/oder Übertragers zweckmäßig.

Besonders vorteilhaft ist an der erfindungsgemäßen Lösung, dass Modems der fraglichen Art als Konsumartikel kostengünstig auf dem Markt erhältlich sind und als Anwenderschnittstelle einen normalen LAN-Anschluss gemäß der Norm IEEE 802.3 aufweisen, so dass keinerlei Aufwand zur Anpassung der Anwenderschnittstelle anfällt. Der Bordrechner eines mit einer erfindungsgemäßen Kommunikationseinrichtung ausgerüsteten beweglichen Objektes kann unmittelbar an den LAN-Anschluss des Modems angeschlossen werden.

Als Datenleitung wird bevorzugt eine unverdrillte symmetrische Zweidrahtleitung mit einer Längsmittelachse und als Kommunikationsinduktivität eine Spule von symmetrischer Querschnittsform verwendet, wobei die Spule zweckmäßigerweise als mehrlagige Leiterplatte ausgebildet ist und die einzelnen Windungen auf verschiedenen Lagen der Leiterplatte angeordnet und mittels Durchkontaktierungen zwischen den Lagen seriell miteinander verbunden sind. Die Anzahl der Windungen ist an die Stärke des von der Datenleitung ausgehenden Magnetfeldes anzupassen. Unter Umständen kann auch eine einzige Windung ausreichen, für die eine Lage einer Leiterplatte ausreicht. Selbstverständlich kann aber auch eine Spule herkömmlicher Bauart, die als Drahtschleife oder Drahtwicklung ausgebildet ist, verwendet werden.

Zur Erzielung einer bestimmten Mindestqualität der Kommunikation, d.h. einer weitestgehend fehlerfreien Datenübertragung mit einer Rate von über 50 MBit/s sollten bestimmte Bedingungen bei der Auslegung einer erfindungsgemäßen Vorrichtung hinsichtlich der Leitungslängen und des Abstandes der Kommunikationsinduktivität von der Datenleitung eingehalten werden, die von der Orientierung der Datenleitung und der Kommunikationsinduktivität relativ zueinander (parallel oder senkrecht) abhängen.

Unter dem Gesichtspunkt der elektromagnetischen Verträglichkeit ist es besonders vorteilhaft wenn die Datenleitung von einer metallischen Abschirmung umgeben ist, die einen in ihrer Längsrichtung verlaufenden Schlitz aufweist, durch welchen hindurch die Kommunikationsinduktivität in eine zu der Datenleitung benachbarte Position, in der sie magnetisch mit der Datenleitung gekoppelt ist, in den Innenraum der Abschirmung einführbar ist. Hierdurch kann die Übertragungsqualität verbessert werden, indem die Einkopplung externer Störsignale in die Datenleitung und die Kommunikationsinduktivität weitgehend verhindert wird. Zugleich wird bei der induktiven Datenkommunikation die Abstrahlung elektromagnetischer Störsignale in die Umgebung der Datenleitung weitgehend vermieden. Die Abschirmung ist insbesondere bei einer hohen Datenrate der induktiven Kommunikation von Bedeutung.

Zweckmäßig ist es hierbei, wenn die Datenleitung als unverdrillte symmetrische Zweidrahtleitung ausgebildet und innerhalb der Abschirmung seitlich gegenüber dem Schlitz versetzt so angeordnet ist, dass die Kommunikationsinduktivität durch eine geradlinige Bewegung in die zu der Datenleitung benachbarte Position im Innenraum der Abschirmung einführbar ist. Die Datenleitung ist in dieser Position nicht nur elektromagnetisch abgeschirmt, sondern durch die Abschirmung zugleich auch mechanisch gegenüber Umgebungseinflüssen geschützt und die Kommunikationsinduktivität kann auf äußerst einfache Weise an die Datenleitung angenähert und entlang dieser in konstantem Abstand bewegt werden. Als Abschirmung wird vorzugsweise ein Hohlprofil aus Metall oder aus metallbeschichtetem Kunststoff verwendet, welches zugleich als mechanischer Träger der Datenleitung fungiert.

Vorteilhaft ist es ferner, wenn die Abschirmung mit einem Träger der Energieleitung und eine Halterung der Kommunikationsinduktivität mit einer Halterung eines Stromabnehmers jeweils mechanisch verbunden sind. Hierdurch kann ein sehr einfaches mechanisches Führungssystem realisiert werden, indem durch die Führung des Stromabnehmers gegenüber der Energieleitung zugleich die korrekte Führung der Kommunikationsinduktivität gegenüber der Datenleitung gewährleistet wird.

Ein weiterer Aspekt der Erfindung ist die Verwendung eines Modems, das zur Kommunikation zwischen stationären Teilnehmern über Stromversorgungsleitungen eines Gebäudes bestimmt ist und nach einem orthogonalen Frequenzmultiplexverfahren mit einer Datenrate von mindestens 50 MBit/s arbeitet, in einer Kommunikationseinrichtung zur induktiven Kommunikation mit einem spur- oder schienengeführten beweglichen Objekt über eine sich entlang einer vorgesehenen Bewegungsbahn des Objekts erstreckende Datenleitung, die parallel zu und separat von einer insbesondere in Form einer durch einen Stromabnehmer kontaktierbaren Schleifleitung zur Versorgung beweglicher Verbraucher ausgebildeten Energieübertragungsleitung verläuft, welcher durch das Objekt während einer Bewegung elektrische Energie entnehmbar ist, und über mindestens eine an dem Objekt angeordnete, magnetisch mit der Datenleitung koppelbare und mit der Kommunikationseinrichtung verbundene Kommunikationsinduktivität. Die Kommunikationseinrichtung ist vorzugsweise ein Bestandteil einer erfindungsgemäßen Vorrichtung der zuvor erläuterten Art.

Weitere Einzelheiten und Vorteile der Erfindung offenbart die nachfolgende Beschreibung eines Ausführungsbeispiels anhand der Zeichnungen. In diesen zeigt

Fig. 1    eine schematische Übersicht einer erfindungsgemäßen Vorrichtung,

Fig. 2    eine erste Anordnung einer Kommunikationsinduktivität gegenüber einer Datenleitung und

Fig. 3    eine zweite Anordnung einer Kommunikationsinduktivität gegenüber einer Datenleitung

Fig. 4    eine Anordnung einer Kommunikationsinduktivität gegenüber einer Datenleitung innerhalb einer Abschirmung.

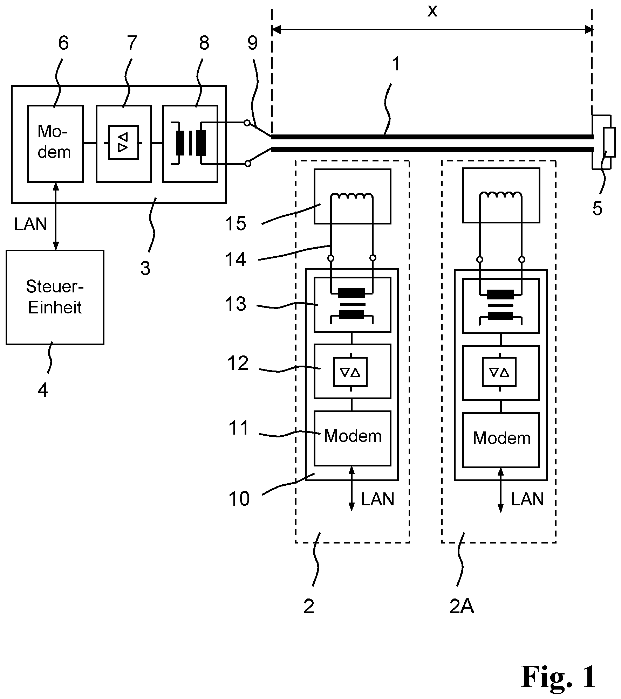

In Fig. 1 ist schematisch eine Datenleitung 1 gezeigt, die aus einer unverdrillten Zweidrahtleitung besteht. Hierfür eignet sich beispielsweise eine Litzleitung mit einem Adernabstand in der Größenordnung von einigen Millimetern, beispielsweise 10mm. Die Datenleitung 1 ist parallel zu einer nicht gezeigten Energieleitung verlegt, über die induktiv oder konduktiv Energie zu beweglichen Objekten 2, 2A übertragbar ist, welche sich entweder schienengeführt oder automatisch gelenkt entlang der Energieleitung bewegen. Einzelheiten der Anordnung einer solchen Datenleitung 1 an einer Energieleitung sind in den eingangs genannten Schriften offenbart und bedürfen daher an dieser Stelle keiner Erläuterung.

Die Datenleitung 1 ist an einem Ende mit einer Kommunikationseinrichtung 3 einer zentralen Steuereinheit 4 verbunden und an ihrem anderen Ende mit einem Abschlusswiderstand 5 abgeschlossen. Die Kommunikationsrichtung 3 der zentralen Steuereinheit 4 enthält ein Modem 6, das über einen Verstärker 7, einen Übertrager 8 und eine Zuleitung 9 mit der Datenleitung 1 verbunden ist. Eine Kommunikationseinrichtung 10 des beweglichen Objekts 2 enthält ebenfalls ein Modem 11, das über einen Verstärker 12, einen Übertrager 13 und eine Zuleitung 14 mit einer Kommunikationsinduktvität 15 verbunden ist.

Die Kommunikationsinduktivität 15 ist an dem Objekt 2 so angeordnet, dass sie sich bei dessen Bewegung entlang seiner vorgesehenen Bewegungsbahn stets benachbart zu der Datenleitung 1 befindet und eine ausreichende induktive Kopplung mit der Datenleitung 1 gegeben ist. Weitere bewegliche Objekte, die in beliebiger Anzahl vorhanden sein können, enthalten die gleichen kommunikationstechnischen Komponenten 11 bis 15 wie das Objekt 2, wie es in Fig. 1 anhand eines weiteren Objektes 2A angedeutet ist.

Bei dem Modem 11 handelt es sich um ein Gerät, das nach einem orthogonalen Frequenzmultiplexverfahren mit einer hohen Übertragungsrate von mindestens 50 MBit/s arbeitet. Modems dieser Art werden für die Datenkommunikation über Leitungen des Stromversorgungsnetzes in Gebäuden eingesetzt und sind als solche auf dem Markt verfügbar, weshalb an dieser Stelle auf eine Erläuterung des internen Aufbaus und der Funktionsweise verzichtet werden kann.

Zur induktiven Kommunikation mit einem beweglichen Objekt 2 über eine Datenleitung 1 unter Verwendung eines Modems 11 besagter Art muss an dieses eine Kommunikationsinduktivität 15 angeschlossen werden. Des weiteren ist zu beachten, dass aufgrund der relativ großen Länge der Datenleitung 1 und der losen Kopplung zwischen der Datenleitung 1 und der Kommunikationsinduktivität 15 auf der Datenleitung 1 im Vergleich zur stationären Gebäudekommunikation im Regelfall eine höhere Sendeleistung und eine höhere Empfangsempfindlichkeit benötigt wird. Daher sind zwischen dem Modem 11 und der zugehörigen Kommunikationsinduktivität 15 ein Verstärker 12 und ein Übertrager 13 mit einem entsprechend ausgelegten Verstärkungsfaktor bzw. Übersetzungsverhältnis vorgesehen.

Auf der Seite der zentralen Steuereinheit 4 kann das Modem 6 der dortigen Kommunikationseinrichtung 3 über einen Verstärker 7 und Übertrager 8 direkt an die Datenleitung 1 angeschlossen werden. Die Verstärker 7 und 12 sowie die Übertrager 8 und 13 sind bedarfsabhängige Optionen. Es könnten auch nur Verstärker 7 und 12 allein oder nur Übertrager 8 und 13 allein verwendet werden. Es versteht sich, dass die Verstärker 7 und 12 sowie die Übertrager 8 und 13 jeweils für bidirektionale Übertragung ausgelegt sein müssen. Bei geringen Reichweiteanforderungen, die mit den normalen Ein- und Ausgangsstufen der Modems 6 und 11 erfüllbar sind, könnte auch auf diese Komponenten verzichtet werden.

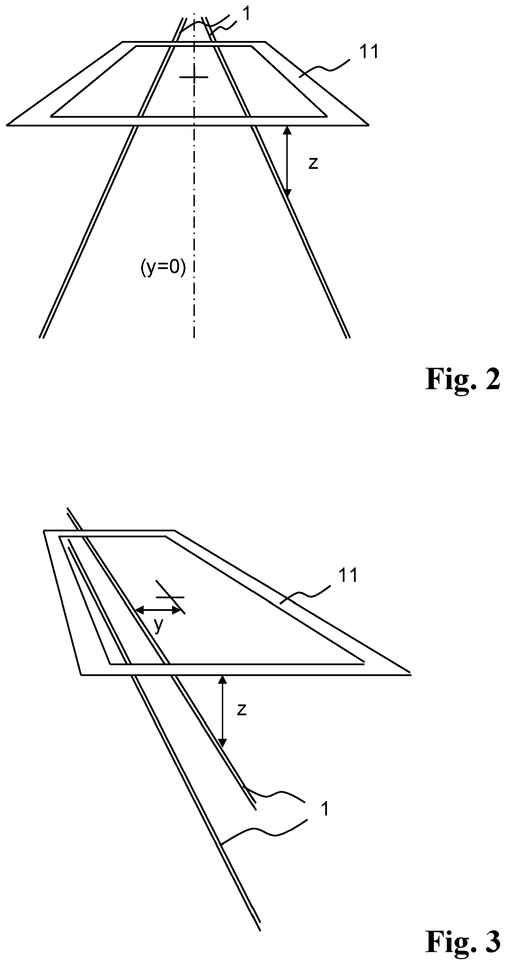

Als Kommunikationsinduktivität 15 eignet sich eine Spule flacher Bauform, die als mehrlagige Leiterplatte ausgebildet ist, wobei die einzelnen Windungen jeweils auf verschiedenen Lagen der Leiterplatte übereinander angeordnet und mittels Durchkontaktierungen zwischen den Lagen seriell miteinander verbunden sind. In den Figuren 2 und 3 sind schematisch zwei mögliche Stellungen einer solchen Kommunikationsinduktivität 15 gegenüber einer Datenleitung 1 gezeigt, wobei in beiden Fällen eine senkrechte Lage der Spulenmittelachse der Kommunikationsinduktivität 15, d.h. eine parallele Lage der Spulenquerschnittsfläche, zur Bewegungsfläche des beweglichen Objektes 2 angenommen ist.

In Fig. 2 liegt die Spulenquerschnittsfläche parallel zu der Ebene, die durch die beiden Adern der als unverdrillte Zweidrahtleitung ausgebildeten Datenleitung 1 definiert wird, während sie in Fig. 3 senkrecht dazu liegt. Die Anordnung nach Fig. 2 ergibt sich, wenn die Datenleitung 1 parallel zur Bewegungsfläche des beweglichen Objektes 2 verlegt ist, d.h. wenn die durch Datenleitung 1 definierte Ebene parallel zur Bewegungsfläche des Objektes 2 liegt. Die Anordnung nach Fig. 3 ergibt sich, wenn die durch die Adern der Datenleitung 1 definierte Ebene senkrecht zur Bewegungsfläche des beweglichen Objektes 2 liegt ist. Beide Anordnungen sind grundsätzlich möglich.

Die Abmessungen der Querschnittsfläche der Spule sind in einer Richtung so an den Adernabstand der Datenleitung 1 angepasst, dass die Spule bei der Anordnung nach Fig. 2 die Datenleitung 1 in deren Querrichtung deutlich überdeckt. In dem dargestellten Beispiel entspricht diese Überdeckung etwa dem Adernabstand. In der dazu senkrechten Richtung, welche in der Anordnung nach Fig. 2 der Längsrichtung der Datenleitung 1 entspricht, kann der Spulenquerschnitt gestreckt werden, um die Empfindlichkeit zu erhöhen, wobei die in den Figuren 2 und 3 dargestellte Rechteckform nur ein Beispiel darstellt. Grundsätzlich könnte die Spule auch eine abgerundete, z.B. elliptische Querschnittsform haben.

In Fig. 2 ist der Abstand der unteren Spulenendfläche der Kommunikationsinduktivität 15 von der durch die Adern der Datenleitung 1 definierten Ebene mit z gekennzeichnet, während in Fig. 3 der Abstand der unteren Spulenendfläche von der nächstliegenden der beiden Adern der Datenleitung 1 mit z gekennzeichnet ist. Mit y ist in Fig. 3 ein seitlicher Abstand Mittelachse der Kommunikationsinduktivität 11 von der durch die die Adern der Datenleitung 1 definierten Ebene gekennzeichnet. In Fig. 2 ist der Fall dargestellt, dass die Mittelachse der Kommunikationsinduktivität 15 genau über der dort strichpunktiert eingezeichneten Mittelachse der Datenleitung 1 liegt, d.h. dass der seitliche Abstand zwischen besagten Achsen y=0 ist. Würde die Kommunikationsinduktivität 15 in Fig. 2 nach links oder rechts verschoben, so wäre dann y≠0. Die induktive Kopplung zwischen der Datenleitung 1 und der Kommunikationsinduktivität 15 nimmt bei beiden Anordnungen mit zunehmenden Abstand y oder z ab.

Außer durch den Kopplungsfaktor der induktiven Kopplung zwischen der Datenleitung 1 und der Kommunikationsinduktivität 15 wird die Qualität einer induktiven Datenübertragung bei gegebener Sendeleistung auch von der Signaldämpfung durch die Datenleitung 1 und durch die Zuleitungen 9 und 14 zwischen dem Übertrager 13 und der Kommunikationsinduktivität 15 sowie zwischen dem Übertrager 8 und der Datenleitung 1 beeinflusst. Eine solche Dämpfung steigt bekanntlich mit zunehmender Leitungslänge an. Die Länge der Datenleitung 1 ist in Fig. 1 mit x gekennzeichnet. Auf eine Kennzeichnung der Längen der Zuleitungen 9 und 14 wurde in Fig. 1 verzichtet, wobei es für die Dämpfung auf deren Gesamtlänge L, welche die Summe der Einzellängen der Zuleitungen 9 und 14 darstellt, ankommt.

Die vorliegende Erfindung sieht vor, dass zur Einhaltung einer akzeptablen Übertragungsqualität, d.h. zur Gewährleistung einer weitestgehend fehlerfreien Übertragung bei einer Bitrate von mindestens 50 MBit/s die vorausgehend erläuterten Abstände x und y sowie die Leitungslängen x und L gemeinsam eine bestimmte Bedingung einhalten müssen, wobei diese davon abhängt, ob die Orientierung der Datenleitung 1 in Bezug auf die Kommunikationsinduktivität 15 der Situation von Fig. 2 oder derjenigen von Fig. 3 entspricht. Die Formeln zur Definition dieser Bedingung sind für diese beiden Fälle in den Unteransprüchen 8 bzw. 9 angegeben.

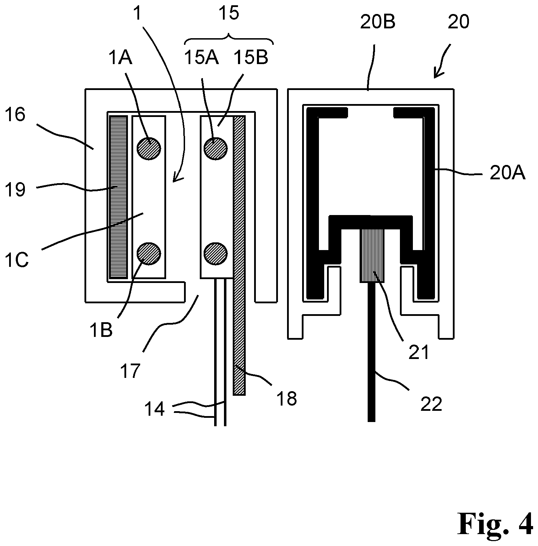

Fig. 4 zeigt eine Querschnittsansicht der Datenleitung 1 einer bevorzugten Ausführungsform der Erfindung, bei der die Datenleitung 1 von einer metallischen Abschirmung 16 umgeben ist, die in diesem Fall die Form eines beispielsweise aus Aluminium bestehenden Hohlprofils hat. Die Datenleitung 1 besteht aus einer unverdrillten Zweidrahtleitung mit zwei zueinander parallelen Adern 1A und 1B, die in eine Isolierung 1C aus Kunststoff eingebettet sind. Die Abschirmung 16 hat eine rechteckige Querschnittsform und weist an einer ihrer Seiten nahe einer Ecke einen Schlitz 17 in Längsrichtung auf, durch den eine Kommunikationsinduktivität 15 in ihren Innenraum eingeführt ist. Die Kommunikationsinduktivität 15 besteht aus einer Leiterschleife 15A und einer Isolierung 15B aus Kunststoff, in welche die Leiterschleife 15A eingebettet ist.

Entlang einer Halterung 18, an der die Isolierung 15B der Kommunikationsinduktivität 15 befestigt ist, ist die zweiadrige Zuleitung 14 der Kommunikationsinduktivität 15 aus der Abschirmung 16 herausgeführt. Durch die Halterung 18 kann die Kommunikationsinduktivität 15 zunächst durch den Schlitz 17 hindurch in den Innenraum der Abschirmung 16 in die in Fig. 4 gezeigte Position benachbart zu der Datenleitung 1 eingebracht werden, um eine magnetische Kopplung mit dieser herzustellen. Die Kommunikationsinduktivität 15 braucht hierzu nur geradlinig parallel zu der durch die beiden Adern 15A und 15B der Datenleitung definierten Ebene in die Abschirmung 16 hinein bewegt zu werden. Dann kann die Kommunikationsinduktivität 15 unter Beibehaltung dieser Position entlang der Datenleitung 1, d.h. senkrecht zur Ansichtsebene von Fig. 4 verschoben werden.

Zwischen der Abschirmung 16 und der Isolierung 1C der Datenleitung 1 befindet sich ein Abstandshalter 19, durch dessen Dicke bei gegebenen Innenabmessungen der Abschirmung 16 der Abstand zwischen der Isolierung 1C der Datenleitung 1 und der Isolierung 15B der Kommunikationsinduktivität 15 eingestellt werden kann. Über den Abstandshalter 19 ist die Isolierung 1C der Datenleitung 1 an der Innenseite der benachbarten Wand der Abschirmung 16 durch beidseitige Klebung befestigt. Der Abstandshalter 19 ist ein optionales Element. Bei einer entsprechenden Anpassung der Form der Abschirmung 16 an die lateralen Abmessungen der Datenleitung 1 und der Kommunikationsinduktivität 15 sowie deren Halterung 18 kann der Abstandshalter 19 auch entfallen und die Isolierung 1C der Datenleitung 1 direkt an der Innenseite der Abschirmung 16 befestigt werden, vorzugsweise durch Kleben.

Die Abschirmung 16 ist bei der Ausführungsform nach Fig. 4 benachbart und parallel zu einer Energieleitung in Form einer Schleifleitung 20 angeordnet, die aus einer Stromschiene 20A und einem einseitig offenen Isolierprofil 20B besteht. Die Abschirmung 16 kann mechanisch mit dem Isolierprofil 20B verbunden sein. An der offenen, in Fig. 4 unten liegenden Seite des Isolierprofils 20B kontaktiert ein Stromabnehmer 21 die Stromschiene 20A. Der Stromabnehmer 21 ist an einer Halterung 22 befestigt und wird von dieser im Betrieb entlang der Stromschiene 20A, d.h. senkrecht zur Ansichtsebene von Fig. 4 geführt. An dem mit Strom zu versorgenden beweglichen Objekt sind sowohl die Halterung 22 des Stromabnehmers 21, als auch die Halterung 18 der Kommunikationsinduktivität 15 befestigt, so dass sich bei einer Bewegung des Objekts beide parallel zueinander bewegen. Dabei kann ständig sowohl der Stromschiene 20A elektrische Leistung entnommen werden, als auch eine drahtlose induktive Kommunikation zwischen der Datenleitung 1 und der Kommunikationsinduktivität 15 stattfinden.

Die Orientierung der Schleifleitung 20 und der Abschirmung 16 in Fig. 4 ist rein beispielhaft gemeint. So könnte die Stromschiene 20A auch seitlich oder von oben kontaktierbar sein und der Schlitz 17 könnte sich an der Abschirmung 16 auch seitlich oder oben befinden. Auch müssen sich der Schlitz 17 und die Öffnung des Isolierprofils 20B nicht nebeneinander befinden, sondern sie könnten sich auch an entgegengesetzten Seiten der Anordnung befinden, beispielsweise indem in Fig. 4 die Schleifleitung 20 zusammen mit dem Stromabnehmer 21 und dessen Halterung 22 gegenüber der dargestellten Lage um 180° gedreht wären.

Es versteht sich, dass die Erfindung auch auf Systeme mit wesentlich mehr als nur zwei beweglichen Objekten 2 und 2A, wie sie in Fig. 1 beispielhaft dargestellt sind, anwendbar ist. Des weiteren ist nicht allein die Kommunikation zwischen einer zentralen Steuereinheit 4 und mehreren beweglichen Objekten 2 und 2A von Interesse, sondern die beweglichen Objekte 2 und 2A können auch direkt miteinander kommunizieren und dies wäre grundsätzlich auch dann möglich, wenn keine zentrale Steuereinheit 4 vorhanden wäre, sondern die Datenleitung 1 an beiden Enden mit je einem Abschlusswiderstand 5 abgeschlossen wäre.

**Patentansprüche**

1. Vorrichtung zur Energieübertragung und zur induktiven Kommunikation zu bzw. mit einem spur- oder schienengeführten beweglichen Objekt (2), mit einer sich entlang einer vorgesehenen Bewegungsbahn des Objekts (2) erstreckenden Energieübertragungsleitung, zur Versorgung beweglicher Verbraucher, welcher durch das Objekt (2) während einer Bewegung elektrische Energie entnehmbar ist, einer parallel zu der Energieübertragungsleitung verlaufenden separaten Datenleitung (1), mindestens einer an dem Objekt (2) angeordneten, magnetisch mit der Datenleitung (1) koppelbaren Kommunikationsinduktivität (15) und mit einer mit der Kommunikationsinduktivität (15) verbundenen Kommunikationseinrichtung (10), **dadurch gekennzeichnet, dass** die Kommunikationseinrichtung (10) ein Modem (11) aufweist, das nach einem orthogonalen Frequenzmultiplexverfahren mit einer Datenrate von mindestens 50 MBit/s arbeitet, und dass die Energieübertragungsleitung insbesondere in Form einer durch einen Stromabnehmer (21) kontaktierbaren Schleifleitung (20) ausgebildet sein kann.

2. Vorrichtung nach Anspruch 1, **dadurch gekennzeichnet, dass** die Funktionsweise des Modems (11) einer Norm der Datenübertragung über Stromversorgungsnetze entspricht.

3. Vorrichtung nach Anspruch 1 oder 2, **dadurch gekennzeichnet, dass** die Funktionsweise des Modems (11) der Norm ITU G.9960 oder der Norm IEEE P1901 oder der Norm HomeplugAV oder der Norm G.hn entspricht.

4. Vorrichtung nach einem der Ansprüche 1 bis 3, **dadurch gekennzeichnet, dass** das Modem (11) über einen Verstärker (12) und/oder einen Übertrager (13) mit der Kommunikationsinduktivität (15) verbunden ist.

5. Vorrichtung nach einem der Ansprüche 1 bis 4, **dadurch gekennzeichnet, dass** ein Ende der Datenleitung (1) an einer mit einer zentralen Steuereinheit (4) verbundenen Kommunikationseinrichtung (3) angeschlossen ist, welche ein Modem (6) der gleichen Art enthält, wie es die Kommunikationseinrichtung (10) des beweglichen Objekts (2) aufweist.

6. Vorrichtung nach Anspruch 5, **dadurch gekennzeichnet, dass** das Modem (6) der mit der zentralen Steuereinheit (4) verbundenen Kommunikationseinrichtung (3) über einen Verstärker (7) und/oder einen Übertrager (8) mit der Datenleitung (1) verbunden ist.

7. Vorrichtung nach einem der Ansprüche 1 bis 6, **dadurch gekennzeichnet, dass** das Modem (6) der Kommunikationseinrichtung (3) und/oder das Modem (11) der Kommunikationseinrichtung (10) als Anwenderschnittstelle einen Ethernet-LAN-Anschluss gemäß der Norm IEEE 802.3 aufweist.

8. Vorrichtung nach einem der Ansprüche 1 bis 7, **dadurch gekennzeichnet, dass** die Datenleitung (1) als unverdrillte symmetrische Zweidrahtleitung mit einer Längsmittelachse und die Kommunikationsinduktivität (15) als eine Spule von symmetrischer Querschnittsform ausgebildet ist.

9. Vorrichtung nach Anspruch 8, **dadurch gekennzeichnet, dass** die Spule als mehrlagige Leiterplatte ausgebildet ist und die einzelnen Windungen auf verschiedenen Lagen der Leiterplatte angeordnet und mittels Durchkontaktierungen zwischen den Lagen seriell miteinander verbunden sind, oder dass die Spule nur eine einzige Windung aufweist und auf einer Lage einer Leiterplatte angeordnet ist.

10. Vorrichtung nach Anspruch 8, **dadurch gekennzeichnet, dass** die Spule als Drahtschleife mit einer Windung oder als Drahtwicklung mit mehreren Windungen ausgebildet ist.

11. Vorrichtung nach einem der Ansprüche 8 bis 10, **dadurch gekennzeichnet, dass** die Spule an dem beweglichen Objekt (2) so angeordnet ist, dass Ihre Querschnittsfläche im Betrieb parallel zu der durch die Adern der Datenleitung (1) definierten Ebene liegt, und dass die Länge x in m der Datenleitung (1), der seitliche Abstand y in mm der Mittelachse der Spule von der Längsmittelachse der Datenleitung (1), der kürzeste Abstand z in mm einer Spulenendfläche von der durch die Adern der Datenleitung (1) definierten Ebene und die Summe L in m der Längen einer die Spule mit der Kommunikationseinrichtung (10) des beweglichen Objekts (2) verbindenden Zuleitung (14) und einer die mit der zentralen Steuereinheit (4) verbundenen Kommunikationseinrichtung (3) mit der Datenleitung (1) verbindenden Zuleitung (9) zumindest annähernd die Bedingung

$$(100 \cdot e^{a \cdot x}) \cdot (b \cdot y^3 + c \cdot y^2 + d \cdot y + 1) \cdot (e \cdot (z-10)^3 + f \cdot (z-10)^2 + g \cdot (z-10) + 1) \cdot (h \cdot L^2 + i \cdot L + 1) \geq 5$$

einhalten, wobei für die Parameter a, b, c, d, e, f, g, h und i folgendes gilt:

$$-0,13 \leq a \leq -0,11$$

$$-1,75 \cdot 10^{-5} \leq b \leq -1,45 \cdot 10^{-5}$$

$$3,0 \cdot 10^{-4} \leq c \leq 3,6 \cdot 10^{-4}$$

$$-3,4 \cdot 10^{-3} \leq d \leq -2,7 \cdot 10^{-3}$$

$$-3,9 \cdot 10^{-5} \leq e \leq -3,1 \cdot 10^{-5}$$

$$2,7 \cdot 10^{-3} \leq f \leq 3,3 \cdot 10^{-3}$$

$$-9,5 \cdot 10^{-2} \leq g \leq -7,7 \cdot 10^{-2}$$

$$2,5 \cdot 10^{-5} \leq h \leq 3,1 \cdot 10^{-5}$$

$$-8,4 \cdot 10^{-3} \leq i \leq -6,8 \cdot 10^{-3}$$

12. Vorrichtung nach einem der Ansprüche 8 bis 10, **dadurch gekennzeichnet, dass** die Spule an dem beweglichen Objekt (2) so angeordnet ist, dass Ihre Querschnittsfläche im Betrieb senkrecht zu der durch die Adern der Datenleitung (1) definierten Ebene liegt, und dass die Länge x in m der Datenleitung, der seitliche Abstand y in mm der Mittelachse der Spule von der durch die Adern der Datenleitung (1) definierten Ebene, der kürzeste Abstand z in mm einer Spulenendfläche von der nächstliegenden Ader der Datenleitung (1) und die Summe L in m der Längen einer die Spule mit der Kommunikationseinrichtung (10) des beweglichen Objekts (2) verbindenden Zuleitung (14) und einer die mit der zentralen Steuereinheit (4) verbundene Kommunikationseinrichtung (3) mit der Datenleitung (1) verbindenden Zuleitung (9) zumindest annähernd die Bedingung

$$(100 \cdot e^{a \cdot x}) \cdot (c \cdot y^2 + d \cdot y + 1) \cdot (e \cdot (z-10)^3 + f \cdot (z-10)^2 + g \cdot (z-10) + 1) \cdot (h \cdot L^2 + i \cdot L + 1) \geq 5$$

einhalten, wobei für die Parameter a, c, d, e, f, g, h und i folgendes gilt:

$$-0,13 \leq a \leq -0,11$$

$$1,6 \cdot 10^{-4} \leq c \leq 2,1 \cdot 10^{-4}$$

$$-2{,}6 \cdot 10^{-2} \le d \le -2{,}1 \cdot 10^{-2}$$

$$-2{,}4 \cdot 10^{-5} \le e \le -2{,}0 \cdot 10^{-5}$$

$$1{,}8 \cdot 10^{-3} \le f \le 2{,}2 \cdot 10^{-3}$$

$$-7{,}5 \cdot 10^{-2} \le g \le -6{,}1 \cdot 10^{-2}$$

$$2{,}5 \cdot 10^{-5} \le h \le 3{,}1 \cdot 10^{-5}$$

$$-8{,}4 \cdot 10^{-3} \le i \le -6{,}8 \cdot 10^{-3}$$

**13.** Vorrichtung nach einem der Ansprüche 1 bis 12, **dadurch gekennzeichnet, dass** die Datenleitung (1) von einer metallischen Abschirmung (16) umgeben ist, die einen in ihrer Längsrichtung verlaufenden Schlitz (17) aufweist, durch welchen hindurch die Kommunikationsinduktivität (15) in eine zu der Datenleitung (1) benachbarte Position, in der sie magnetisch mit der Datenleitung (1) gekoppelt ist, in den Innenraum der Abschirmung (16) einführbar ist.

**14.** Vorrichtung nach Anspruch 13, **dadurch gekennzeichnet, dass** die Datenleitung (1) als unverdrillte symmetrische Zweidrahtleitung ausgebildet und innerhalb der Abschirmung (16) seitlich gegenüber dem Schlitz (17) versetzt so angeordnet ist, dass die Kommunikationsinduktivität (15) durch eine geradlinige Bewegung in die zu der Datenleitung (1) benachbarte Position im Innenraum der Abschirmung (16) einführbar ist.

**15.** Vorrichtung nach Anspruch 13 oder 14, **dadurch gekennzeichnet, dass** die Abschirmung (16) ein Hohlprofil aus Metall oder metallbeschichtetem Kunststoff ist, welches zugleich als mechanischer Träger der Datenleitung (1) fungiert.

**16.** Vorrichtung nach einem der Ansprüche 13 bis 15, **dadurch gekennzeichnet, dass** die Abschirmung (16) mit einem Träger (20B) der Energieleitung (20) und eine Halterung (18) der Kommunikationsinduktivität (15) mit einer Halterung (22) eines Stromabnehmers (21) jeweils mechanisch verbunden sind.

**17.** Verwendung einer Kommunikationseinrichtung zur induktiven Kommunikation mit einem spur- oder schienengeführten beweglichen Objekt (2) über eine sich entlang einer vorgesehenen Bewegungsbahn des Objekts (2) erstreckende Datenleitung (1), die parallel zu und separat von einer Energieübertragungsleitung verläuft, welcher durch das Objekt (2) während einer Bewegung elektrische Energie entnehmbar ist, und über mindestens eine an dem Objekt (2) angeordnete, magnetisch mit der Datenleitung (1) koppelbare und mit der Kommunikationseinrichtung (10) verbundene Kommunikationsinduktivität (15), **dadurch gekennzeichnet, dass** ein Modem (11) verwendet wird, das zur Kommunikation zwischen stationären Teilnehmern über Stromversorgungsleitungen eines Gebäudes bestimmt ist und nach einem orthogonalen Frequenzmultiplexverfahren mit einer Datenrate von mindestens 50 MBit/s arbeitet, und dass die Energieübertragungsleitung insbesondere in Form einer durch einen Stromabnehmer (21) kontaktierbaren Schleifleitung (20) ausgebildet sein kann.

**18.** Verwendung nach Anspruch 17, **dadurch gekennzeichnet, dass** die Kommunikationseinrichtung (10) Bestandteil einer Vorrichtung nach einem der Ansprüche 1 bis 16 ist.

**Claims**

**1.** Apparatus for power transmission to and for inductive communication with a track or rail-guided movable object (2), with a power transmission line extending along an intended path of movement of the object (2) and serving for supplying movable consumers and from which electric power can be drawn by the object (2) while moving, with a separate data line (1) running parallel to the power transmission line, with at least one communications induction coil (15) which is arranged on the object (2) and can be coupled magnetically with the data line (1), and with a communications device (10) connected with the communications induction coil (15), **characterised in that** the communications device (10) has a modem (11) which operates according to an orthogonal frequency division multiplexing method with a data rate of at least 50 MBit/s, and **in that** the power transmission line can be embodied in particular in the form of a conductor line (20) with which a current collector (21) can make contact.

2.  Apparatus according to claim 1, **characterised in that** the operation of the modem (11) conforms to a standard for data transmission over power supply networks.

3.  Apparatus according to claim 1 or 2, **characterised in that** the operation of the modem (11) conforms to the ITU G.9960 standard or the IEEE P1901 standard or the HomeplugAV standard or the G.hn standard.

4.  Apparatus according to one of claims 1 to 3, **characterised in that** the modem (11) is connected with the communications induction coil (15) by means of an amplifier (12) and/or a transformer (13).

5.  Apparatus according to one of claims 1 to 4, **characterised in that** one end of the data line (1) is connected to a communications device (3) which is connected with a central control unit (4) and contains a modem (6) of the same kind as that of the communications device (10) of the movable object (2).

6.  Apparatus according to claim 5, **characterised in that** the modem (6) of the communications device (3) connected with the central control unit (4) is connected with the data line (1) by means of an amplifier (7) and/or a transformer (8).

7.  Apparatus according to one of claims 1 to 6, **characterised in that** the modem (6) of the communications device (3) and/or the modem (11) of the communications device (10) has an Ethernet LAN port according to the IEEE 802.3 standard as user interface.

8.  Apparatus according to one of claims 1 to 7, **characterised in that** the data line (1) is embodied in the form of an untwisted symmetrical two-wire line with a longitudinal central axis and the communications induction coil (15) is embodied in the form of a coil of symmetrical cross-sectional shape.

9.  Apparatus according to claim 8, **characterised in that** the coil is embodied in the form of a multi-layered circuit board and the individual windings are arranged on different layers of the circuit board and connected with one another in series by means of vias between the layers, or **in that** the coil only has a single turn and is arranged on one layer of a circuit board.

10. Apparatus according to claim 8, **characterised in that** the coil is embodied in the form of a wire coil with one winding or as a wire winding with a plurality of turns.

11. Apparatus according to one of claims 8 to 10, **characterised in that** the coil is arranged on the movable object (2) so that its cross-sectional area lies parallel to the plane defined by the wires of the data line (1) in operation, and **in that** the length x in m of the data line (1), the lateral distance y in mm of the central axis of the coil from the longitudinal central axis of the data line (1), the shortest distance z in mm of a coil end face from the plane defined by the wires of the data line (1) and the sum L in m of the lengths of a feed line (14) connecting the coil with the communications device (10) of the movable object (2) and a feed line (9) connecting the communications device (3) connected with the central control unit (4) with the data line (1) at least approximately satisfy the condition

$$(100 \cdot e^{a \cdot x}) \cdot (b \cdot y^3 + c \cdot y^2 + d \cdot y + 1) \cdot (e \cdot (z-10)^3 + (f \cdot (z-10)^2 + g \cdot (z-10) + 1) \cdot (h \cdot L^2 + i \cdot L + 1) \geq 5,$$

wherein the following applies to the parameters a, b, c, d, e, f, g, h and i:

$$-0.13 \leq a \leq -0.11$$

$$-1.75 \cdot 10^{-5} \leq b \leq -1.45 \cdot 10^{-5}$$

$$3.0\cdot10^{-4} \le c \le 3.6\cdot10^{-4}$$

$$-3.4\cdot10^{-3} \le d \le -2.7\cdot10^{-3}$$

$$-3.9\cdot10^{-5} \le e \le -3.1\cdot10^{-5}$$

$$2.7\cdot10^{-3} \le f \le 3.3\cdot10^{-3}$$

$$-9.5\cdot10^{-2} \le g \le -7.7\cdot10^{-2}$$

$$2.5\cdot10^{-5} \le h \le 3.1\cdot10^{-5}$$

$$-8.4\cdot10^{-3} \le i \le -6.8\cdot10^{-3}$$

**12.** Apparatus according to one of claims 8 to 10, **characterised in that** the coil is arranged on the movable object (2) so that its cross-sectional area lies perpendicular to the plane defined by the wires of the data line (1) in operation, and **in that** the length x in m of the data line, the lateral distance y in mm of the central axis of the coil from the plane defined by the wires of the data line (1), the shortest distance z in mm of a coil end face from the nearest wire of the data line (1) and the sum L in m of the lengths of a feed line (14) connecting the coil with the communications device (10) of the movable object (2) and a feed line (9) connecting the communications device (3) connected with the central control unit (4) with the data line (1) at least approximately satisfy the condition

$$(100\cdot e^{a\cdot x}) \cdot (c\cdot y^2 + d\cdot y + 1)\cdot (e\cdot(z-10)^3 + (f\cdot(z-10)^2 + g\cdot(z-10) + 1)\cdot (h\cdot L^2 + i\cdot L + 1) \ge 5,$$

wherein the following applies to the parameters a, c, d, e, f, g, h and i:

$$-0.13 \le a \le -0.11$$

$$1.6\cdot10^{-4} \le c \le 2.1\cdot10^{-4}$$

$$-2.6\cdot10^{-2} \le d \le -2.1\cdot10^{-2}$$

$$-2.4\cdot10^{-5} \le e \le -2.0\cdot10^{-5}$$

$$1.8\cdot10^{-3} \le f \le 2.2\cdot10^{-3}$$

$$-7.5\cdot10^{-2} \le g \le -6.1\cdot10^{-2}$$

$$2.5\cdot10^{-5} \le h \le 3.1\cdot10^{-5}$$

$$-8.4 \cdot 10^{-3} \le i \le -6.8 \cdot 10^{-3}$$

13. Apparatus according to one of claims 1 to 12, **characterised in that** the data line (1) is surrounded by a metallic shield (16) which has a slot (17) running in its longitudinal direction through which the communications induction coil (15) can be introduced into the interior of the shield (16) into a position adjacent to the data line (1) in which it is magnetically coupled with the data line (1).

14. Apparatus according to claim 13, **characterised in that** the data line (1) is embodied in the form of an untwisted symmetrical two-wire line and arranged inside the shield (16) offset laterally in relation to the slot (17) so that the communications induction coil (15) can be introduced into the position adjacent to the data line (1) in the interior of the shield (16) by a movement in a straight line.

15. Apparatus according to claim 13 or 14, **characterised in that** the shield (16) is a hollow profile made of metal or metal-coated plastic which at the same time functions as a mechanical carrier for the data line (1).

16. Apparatus according to one of claims 13 to 15, **characterised in that** the shield (16) is connected mechanically with a carrier (20B) of the power line (20) and a mounting (18) of the communications induction coil (15) is connected mechanically with a mounting (22) of a current collector (21).

17. Use of a communications device for inductive communication with a track or rail guided movable object (2) by means of a data line (1) which extends along an intended path of movement of the object (2) and runs parallel to and separate from a power transmission line from which electric power can be drawn by the object (2) while moving, and by means of at least one communications induction coil (15) which is arranged on the object (2) and can be coupled magnetically with the data line (1) and is connected with the communications device (10), **characterised in that** a modem (11) is used which is designed for communication between stationary members by means of power supply lines of a building and operates according to an orthogonal frequency division multiplexing method with a data rate of at least 50 MBit/s, and **in that** the power transmission line can be embodied in particular in the form of a conductor line (20) with which a current collector (21) can make contact.

18. Use according to claim 17, **characterised in that** the communications device (10) is a component part of an apparatus according to one of claims 1 to 16.

## Revendications

1. Dispositif de transmission d'énergie et de communication par induction à ou avec un objet (2) mobile guidé sur voie ou sur rails, comprenant une ligne de transmission d'énergie s'étendant le long d'une trajectoire de déplacement prévue de l'objet (2), servant à l'alimentation de consommateurs mobiles, de laquelle de l'énergie électrique peut être prélevée par l'objet (2) au cours d'un déplacement, une ligne de données (1) séparée s'étendant de manière parallèle par rapport à la ligne de transmission d'énergie, au moins une inductance de communication (15) disposée au niveau de l'objet (2), pouvant être couplée magnétiquement à la ligne de données (1) et un système de communication (10) relié à l'inductance de communication (15), **caractérisé en ce que** le système de communication (10) présente un modem (11), qui fonctionne selon un procédé de multiplexage fréquentiel orthogonal à un débit de transfert de données d'au moins 50 Mbit/s, et que la ligne de transmission d'énergie peut être réalisée en particulier sous la forme d'une ligne de contact (20) pouvant être mise en contact avec un pantographe (21).

2. Dispositif selon la revendication 1, **caractérisé en ce que** le mode de fonctionnement du modem (11) correspond à une norme de la transmission de données par l'intermédiaire de réseaux d'alimentation électrique.

3. Dispositif selon la revendication 1 ou 2, **caractérisé en ce que** le mode de fonctionnement du modem (11) correspond à la norme UIT G.9960 ou à la norme IEEE P1901 ou à la norme HomeplugAV ou à la norme G.hn.

4. Dispositif selon l'une quelconque des revendications 1 à 3, **caractérisé en ce que** le modem (11) est relié à l'inductance de communication (15) par l'intermédiaire d'un amplificateur (12) et/ou d'un transmetteur (13).

5. Dispositif selon l'une quelconque des revendications 1 à 4, **caractérisé en ce qu'**une extrémité de la ligne de données (1) est raccordée à un système de communication (3) relié à une unité de commande (4) centrale, laquelle contient un modem (6) du même type que celui présenté par le système de communication (10) de l'objet (2) mobile.

6. Dispositif selon la revendication 5, **caractérisé en ce que** le modem (6) du système de communication (3) relié à l'unité de commande (4) centrale est relié à la ligne de données (1) par l'intermédiaire d'un amplificateur (7) et/ou d'un transmetteur (8).

7. Dispositif selon l'une quelconque des revendications 1 à 6, **caractérisé en ce que** le modem (6) du système de communication (3) et/ou le modem (11) du système de communication (10) présentent en tant qu'interface utilisateur un port Ethernet-LAN selon la norme IEEE 802.3.

8. Dispositif selon l'une quelconque des revendications 1 à 7, **caractérisé en ce que** la ligne de données (1) est réalisée sous la forme d'une ligne bifilaire symétrique non torsadée comprenant un axe central longitudinal, et l'inductance de communication (15) est réalisée sous la forme d'une bobine présentant une section transversale de forme symétrique.

9. Dispositif selon la revendication 8, **caractérisé en ce que** la bobine est réalisée sous la forme d'une carte de circuits imprimés multicouche et les diverses spires sont disposées sur des couches différentes de la carte de circuits imprimés et sont reliées entre elles en série au moyen de vias, ou que la bobine présente seulement une unique spire et est disposée sur une couche d'une carte de circuits imprimés.

10. Dispositif selon la revendication 8, **caractérisé en ce que** la bobine est réalisée sous la forme d'une boucle de fil métallique comprenant une spire ou sous la forme d'un enroulement de fil métallique comprenant plusieurs spires.

11. Dispositif selon l'une quelconque des revendications 8 à 10, **caractérisé en ce que** la bobine est disposée au niveau de l'objet (2) mobile de telle sorte que sa face de section transversale est située, en fonctionnement, de manière parallèle par rapport au plan défini par les brins de la ligne de données (1), et que la longueur x exprimée en m de la ligne de données (1), la distance latérale y exprimée en mm de l'axe central de la bobine par rapport à l'axe central longitudinal de la ligne de données (1), la distance la plus courte z exprimée en mm d'une face d'extrémité de bobine par rapport au plan défini par les brins de la ligne de données (1) et la somme L exprimée en m des longueurs d'une ligne d'arrivée (14) reliant la bobine au système de communication (10) de l'objet mobile (2) et d'une ligne d'arrivée (9) reliant le système de communication (3) relié à l'unité de commande centrale (4) à la ligne de données (1) respectent au moins approximativement la condition

$$(100 \cdot e^{a \cdot x}) \cdot (b \cdot y^3 + c \cdot y^2 + d \cdot y + 1) \cdot (e \cdot (z-10)^3 + f \cdot (z-10)^2 + g \cdot (z-10) + 1) \cdot (h \cdot L^2 + i \cdot L + 1) \geq 5$$

dans lequel s'applique pour les paramètres a, b, c, d, e, f, g, h et i ce qui suit :

$$-0,13 \leq a \leq -0,11$$

$$-1,75 \cdot 10^{-5} \leq b \leq -1,45 \cdot 10^{-5}$$

$$3,0 \cdot 10^{-4} \leq c \leq 3,6 \cdot 10^{-4}$$

$$-3,4 \cdot 10^{-3} \leq d \leq -2,7 \cdot 10^{-3}$$

$$-3,9 \cdot 10^{-5} \leq e \leq -3,1 \cdot 10^{-5}$$

$$2,7 \cdot 10^{-3} \leq f \leq 3,3 \cdot 10^{-3}$$

$$-9,5\cdot10^{-2} \leq g \leq -7,7\cdot10^{-2}$$

$$2,5\cdot10^{-5} \leq h \leq 3,1\cdot10^{-5}$$

$$-8,4\cdot10^{-3} \leq i \leq -6,8\cdot10^{-3}\quad.$$

**12.** Dispositif selon l'une quelconque des revendications 8 à 10, **caractérisé en ce que** la bobine est disposée au niveau de l'objet (2) mobile de telle sorte que sa face de section transversale est située, en fonctionnement, de manière perpendiculaire par rapport au plan défini par les brins de la ligne de données (1), et que la longueur x exprimée en m de la ligne de données, la distance latérale y exprimée en mm de l'axe central de la bobine par rapport au plan défini par les brins de la ligne de données (1), la distance la plus courte z exprimée en mm d'une face d'extrémité de bobine par rapport au brin situé le plus proche de la ligne de données (1) et la somme L exprimée en m des longueurs d'une ligne d'arrivée (14) reliant la bobine au système de communication (10) de l'objet mobile (2) et d'une ligne d'arrivée (9) reliant le système de communication (3) relié à l'unité de commande centrale (4) à la ligne de données (1) respectent au moins approximativement la condition

$$(100\cdot e^{a\cdot x}) \cdot (c\cdot y^{2}+d\cdot y+1)\cdot (e\cdot(z-10)^{3}+f\cdot(z-10)^{2}+g\cdot(z-10)+1)\cdot (h\cdot L^{2}+i\cdot L+1) \geq 5$$

dans lequel s'applique pour les paramètres a, c, d, e, f, g, h et i ce qui suit :

$$-0,13 \leq a \leq -0,11$$

$$1,6\cdot10^{-4} \leq c \leq 2,1\cdot10^{-4}$$

$$-2,6\cdot10^{-2} \leq d \leq -2,1\cdot10^{-2}$$

$$-2,4\cdot10^{-5} \leq e \leq -2,0\cdot10^{-5}$$

$$1,8\cdot10^{-3} \leq f \leq 2,2\cdot10^{-3}$$

$$-7,5\cdot10^{-2} \leq g \leq -6,1\cdot10^{-2}$$

$$2,5\cdot10^{-5} \leq h \leq 3,1\cdot10^{-5}$$

$$-8,4\cdot10^{-3} \leq i \leq -6,8\cdot10^{-3}\quad.$$

**13.** Dispositif selon l'une quelconque des revendications 1 à 12, **caractérisé en ce que** la ligne de données (1) est entourée par un blindage (16) métallique, qui présente une entaille (17) s'étendant dans sa direction longitudinale, à travers laquelle l'inductance de communication (15) peut être introduite dans l'espace intérieur du blindage (16) dans une position adjacente à la ligne de données (1), dans laquelle elle est couplée magnétiquement à la ligne de données (1).

**14.** Dispositif selon la revendication 13, **caractérisé en ce que** la ligne de données (1) est réalisée sous la forme d'une ligne bifilaire symétrique non torsadée et est disposée de manière décalée à l'intérieur du blindage (16) de manière latérale par rapport à l'entaille (17) de sorte que l'inductance de communication (15) peut être introduite par un déplacement rectiligne dans la position adjacente à la ligne de données (1) dans l'espace intérieur du blindage (16).

15. Dispositif selon la revendication 13 ou 14, **caractérisé en ce que** le blindage (16) est un profil creux composé de métal ou d'une matière plastique revêtue de métal, lequel fait office dans le même temps d'un support mécanique de la ligne de données (1).

16. Dispositif selon l'une quelconque des revendications 13 à 15, **caractérisé en ce que** sont reliés respectivement de manière mécanique le blindage (16) à un support (20B) de la ligne de contact (20) et une fixation (18) de l'inductance de communication (15) à une fixation (22) d'un pantographe (21).

17. Utilisation d'un système de communication servant à la communication par induction avec un objet (2) mobile guidé sur voie ou sur rails par l'intermédiaire d'une ligne de donnes (1) s'étendant le long d'une trajectoire de déplacement prévue de l'objet (2), laquelle ligne de données s'étend de manière parallèle par rapport à ligne de transmission d'énergie et de manière séparée de cette dernière, de laquelle de l'énergie électrique peut être prélevée par l'objet (2) au cours d'un déplacement, et par l'intermédiaire d'au moins une inductance de communication (15) disposée au niveau de l'objet (2), pouvant être couplée magnétiquement à la ligne de données (1) et reliée au système de communication (10), **caractérisée en ce qu'**un modem (11) est utilisé, lequel se destine à la communication entre des abonnés stationnaires par l'intermédiaire de lignes d'alimentation électrique d'un bâtiment et fonctionne selon un procédé de multiplexage fréquentiel orthogonal à un débit de transfert de données d'au moins 50 Mbit/s, et que la ligne de transmission d'énergie peut être réalisée en particulier sous la forme d'une ligne de contact (20) pouvant être mise en contact avec un pantographe (21).

18. Utilisation selon la revendication 17, **caractérisée en ce que** le système de communication (10) fait partie intégrante d'un dispositif selon l'une quelconque des revendications 1 à 16.

Fig. 1

**Fig. 2**

**Fig. 3**

EP 2 673 157 B1

**Fig. 4**

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10216422 A1
- WO 03005380 A2
- WO 03026915 A1
- DE 19512107 A1
- DE 3916610 A1